# EUROPEAN PATENT APPLICATION

(11) **EP 2 570 269 A1**
(43) Date of publication of application: **20.03.2013**
(21) Application number: 12183640.7
(22) Date of filing: 10.09.2012
(51) Int. Cl.: B60B 27/00

(54) **Hub Unit**

(30) Priority: 13.09.2011 JP 2011199155
(71) Applicant: JTEKT CORPORATION, Osaka-shi Osaka 542-8502 (JP)
(72) Inventor: Onizuka, Takaaki, Osaka-shi,, Osaka 542-8502 (JP)
(74) Representative: Winter, Brandl, Fürniss, Hübner, Röss, Kaiser, Polte - Partnerschaft

(57) **Abstract**

A hub unit (1) includes a rolling bearing (2) and a flange (4)integrally formed with a hub wheel that may function as a bearing ring member (3) of the rolling bearing (2). The flange (4) has a plurality of thick portions (21) formed at predetermined intervals in the circumferential direction of the flange (4). Each thick portion (21) has a bolt hole (22) that extends through the corresponding thick portion (21) in the thickness direction of the thick portion. Work holes (23) through which a working tool is able to be inserted and which extend through the flange (4) in the thickness direction of the flange are formed between the bolt holes (22)adjacent to each other in the circumferential direction. A circumferential width (W) of each thick portion (21 that has the bolt hole (22) and that is adjacent to the work holes (23) in the circumferential direction is set to such a width dimension (W) that the thick portion (21) does not interfere with the adjacent work holes (23).

## Description

### BACKGROUND OF THE INVENTION

### 1. Field of the Invention

The invention relates to a hub unit to which a wheel is fitted.

### 2. Description of Related Art

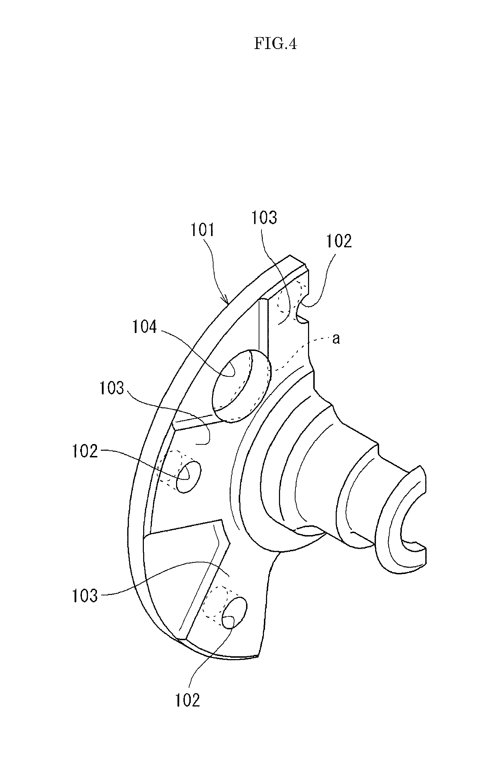

For example, a hub unit is used to support a wheel of an automobile such that the wheel is rotatable relative to a suspension. The hub unit includes a rolling bearing and a flange. The flange is integrally formed with a bearing ring member of the rolling bearing. As shown in FIG. 4, a flange 101 of a conventional hub unit has bolt holes 102 for fitting components, such as a wheel and a disc rotor, to the flange 101. The bolt holes 102 extend through the flange 101 in its thickness direction. Therefore, the flange 101 has a plurality of reinforcement thick portions 103 formed at portions at which the bolt holes 102 are formed. The reinforcement thick portions 103 are arranged at predetermined intervals in the circumferential direction of the flange 101.

Work holes 104 are formed between the bolt holes 102 that are adjacent to each other in the circumferential direction of the flange 101. Each work hole 104 extends through the flange 101 in its thickness direction. A working tool (not shown), such as a hexagonal wrench, is inserted through each work hole 104 (for example, see Japanese Patent No. 3903156). The working tool is able to fasten or remove a bolt (not shown) for fixing the hub unit to the suspension while being inserted through the work hole 104.

The conventional work hole 104 is formed by removing a portion "a" of the reinforcement thick portion 103 in the flange 101. Therefore, stress concentrates on a portion of the reinforcement thick portion 103, at which the portion "a" is removed, resulting in a decrease in the strength of the flange 101.

### SUMMARY OF THE INVENTION

It is an object of the invention to provide a hub unit in which a decrease in the strength of a flange is suppressed even if work holes are formed.

An aspect of the invention relates to a hub unit that includes: a rolling bearing; and a flange that is integrally formed with a bearing ring member of the rolling bearing. The flange has a plurality of thick portions formed at predetermined intervals in a circumferential direction of the flange. Each of the thick portions has a bolt hole that extends through the corresponding thick portion in a thickness direction of the thick portion. A work hole through which a working tool is able to be inserted and which extends through the flange in a thickness direction of the flange is formed at at least one of positions between the bolt holes adjacent to each other in the circumferential direction. A circumferential width of each thick portion that has the bolt hole and that is adjacent to the work hole in the circumferential direction is set to such a width dimension that the thick portion does not interfere with the work hole.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a sectional view that shows a hub unit according to an embodiment of the invention;
FIG. 2 is a perspective view that shows a flange of the hub unit;
FIG. 3 is a front view that shows the flange; and
FIG. 4 is a perspective view that shows a flange of a conventional hub unit.

### DETAILED DESCRIPTION OF EMBODIMENTS

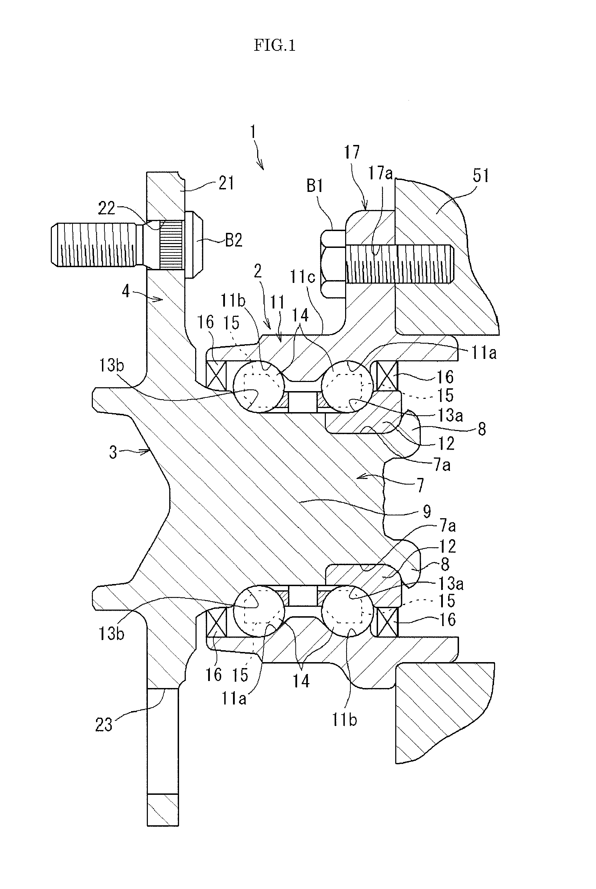

Hereinafter, an embodiment of the invention will be described in detail with reference to the accompanying drawings. FIG. 1 is a sectional view that shows a hub unit 1 according to the embodiment of the invention. Note that the lateral direction of FIG. 1 corresponds to the axial direction of the hub unit 1, the left side of FIG. 1 corresponds to the axially outer side and the right side of FIG. 1 corresponds to the axially inner side.

The hub unit 1 supports, for example, a wheel of an automobile such that the wheel is rotatable relative to a suspension that is a vehicle-body side member. The hub unit 1 includes a rolling bearing 2, a hub wheel 3, and an annular flange 4. The hub wheel 3 may function as a bearing ring member of the rolling bearing 2. The flange 4 is integrally formed with the hub wheel 3. The material of the hub wheel 3 and flange 4 in the present embodiment is formed by, for example, hot forging.

The hub wheel 3 has a small-diameter portion 7, a clinched portion 8, and a large-diameter portion 9. The small-diameter portion 7 and the large-diameter portion 9 each have a circular sectional shape. The clinched portion 8 is formed by bending and deforming the axially inward end portion of the small-diameter portion 7 outward in the radial direction. The large-diameter portion 9 is larger in diameter than the small-diameter portion 7, and is formed so as to be contiguous with the small-diameter portion 7 and extend axially outward from the small-diameter portion 7. The flange 4 is formed at the large-diameter portion 9 of the hub wheel 3. The flange 4 extends radially outward from the outer periphery of the large-diameter portion 9.

The rolling bearing 2 is, for example, a double row ball bearing, and includes an outer ring 11 and an inner ring member 12. The outer ring 11 has a pair of outer ring raceway surfaces 11a, 11b on its inner periphery. The inner ring member 12 is fitted such that the inner periphery of the inner ring member 12 is in close contact with an outer periphery 7a of the small-diameter portion 7 of the hub wheel 3. The inner ring member 12 has an inner ring raceway surface 13a on its outer periphery. The inner ring raceway surface 13a faces the outer ring raceway surface 11a that is located axially inward of the outer ring raceway surface 11b. The large-diameter portion 9 of the hub wheel 3 has an inner ring raceway surface 13b on its outer periphery. The inner ring raceway surface 13b faces the outer ring raceway surface 11b that is located axially outward of the outer ring raceway surface 11a.

In addition, the rolling bearing 2 includes a plurality of balls (rolling elements) 14 and a pair of cages 15. Two rows of the balls (rolling elements) 14 are rollably arranged respectively between the outer ring raceway surface 11a and the inner ring raceway surface 13a and between the outer ring raceway surface 11b and the inner ring raceway surface 13b. The cages 15 retain the balls 14, arranged in two rows, at predetermined intervals in the circumferential direction.

Furthermore, the rolling bearing 2 includes seal members 16 and a bearing flange 17. The seal members 16 seal an annular space, formed between the hub wheel 3 and the outer ring 11, from both axial ends. The bearing flange 17 extends radially outward from an outer periphery 11c of the outer ring 11. The bearing flange 17 has a plurality of bolt holes 17a that extend through the bearing flange 17 in its thickness direction. A bolt B1 is inserted through each bolt hole 17a, and is screwed to a knuckle 51 of a suspension. In this way, the bearing flange 17 is fixed to the knuckle 51.

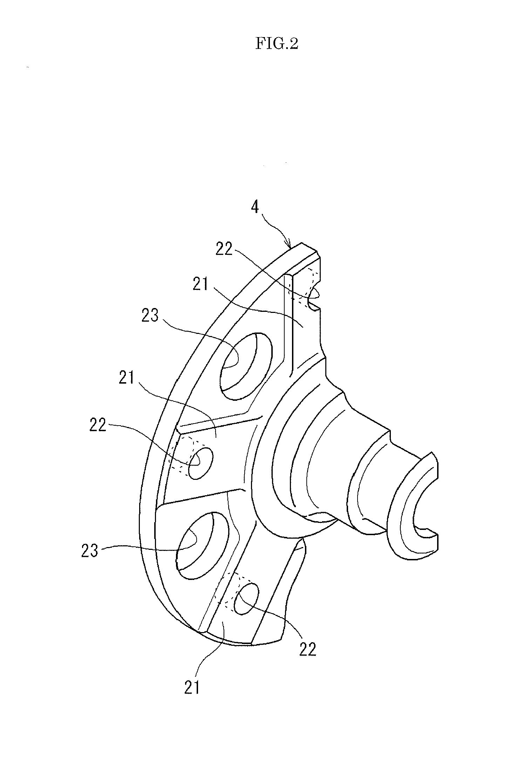

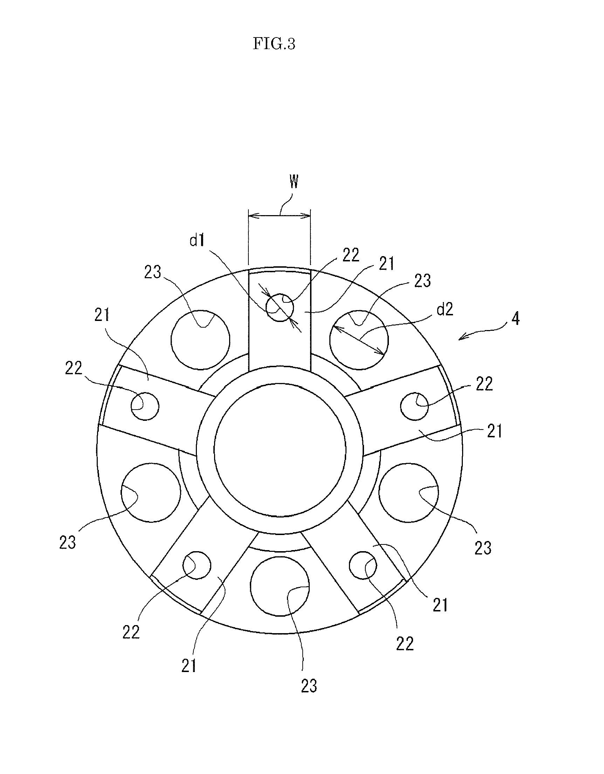

FIG. 2 is a perspective view that shows the flange 4. FIG. 3 is a front view that shows the flange 4. In FIG. 2 and FIG. 3, the flange 4 has a plurality of (five in the present embodiment) thick portions 21 that are formed at predetermined intervals in the circumferential direction of the flange 4. Each thick portion 21 is formed so as to rise up such that an axially inward end face of each thick portion 21 is located higher than axially inward end faces of the other portions of the flange 4. The thick portions 21 are formed so as to radially extend in a radial manner, as shown in the front view in FIG. 3. In addition, each thick portion 21 has a predetermined width W in the circumferential direction (hereinafter, referred to as "circumferential width W").

Each thick portion 21 has one bolt hole 22 at a radially outward portion thereof. Each bolt hole 22 extends through the corresponding thick portion 21 in its thickness direction, at a substantially center portion in the direction of the circumferential width W. As shown in FIG. 1, a hub bolt B2 for fitting a wheel and a brake disc to the flange 4 is fixedly press-fitted into each bolt hole 22. Therefore, the diameter d1 (see FIG. 3) of each bolt hole 22 is set to such a size that the hub bolt B2 is able to be press-fitted into the bolt hole 22.

In addition, work holes 23 are formed between the thick portions 21 of the flange 4. The work holes 23 extend through the flange 4 in its thickness direction, at positions between the bolt holes 22 adjacent to each other in the circumferential direction. Each work hole 23 is formed in a circular shape by, for example, perforating through forging. A working tool (not shown), such as a hexagonal wrench, is inserted through each work hole 23. The working tool is used to screw or remove the bolt B 1 for fixing the bearing flange 17 to the knuckle 51.

Therefore, the diameter d2 (see FIG. 3) of each work hole 23 is set to such a size that the working tool is inserted through the work hole 23 to screw or remove the bolt B1, with an allowance that is set in consideration of variations in size due to the perforating. Then, the circumferential width W of each thick portion 21 is set such that the circumferential width W is wider than the diameter d1 of each bolt hole 22 and each thick portion 21 does not interfere with the adjacent work holes 23.

With the hub unit 1 according to the embodiment of the invention, the circumferential width W of each thick portion 21 in the flange 4 is set such that each thick portion 21 does not interfere with the work holes 23, so it is possible to form the work holes 23 without interference with the thick portions 21. In this way, it is possible to suppress stress concentration on the portions at which the work holes 23 are formed. Therefore, it is possible to suppress a decrease in the strength of the flange 4 even if the work holes 23 are formed in such a size that the working tool is able to be inserted into each work hole 23.

Note that the invention is not limited to the above-described embodiment, and may be implemented in various other embodiments. For example, in the above-described embodiment, the work holes 23 are formed between the adjacent bolt holes 22 of the flange 4. Alternatively, the work hole 23 may be formed at at least one of the positions between the adjacent bolt holes 22 of the flange 4.

In addition, each work hole 23 according to the above-described embodiment is formed in a circular shape. Alternatively, each work hole 23 may be formed in another shape, such as an elliptical shape and an oval shape. Furthermore, the rolling bearing 2 according to the above-described embodiment is formed of a double row ball bearing. Alternatively, the rolling bearing 2 may be formed of another rolling bearing, such as a tapered roller bearing.

With the hub unit according to the embodiment of the invention, it is possible to suppress stress concentration on a portion at which a work hole is formed. Therefore, it is possible to suppress a decrease in the strength of the flange even if the work hole is formed.

## Claims

1. A hub unit, comprising:
a rolling bearing; and
a flange that is integrally formed with a bearing ring member of the rolling bearing,
wherein the flange has a plurality of thick portions formed at predetermined intervals in a circumferential direction of the flange,
wherein each of the thick portions has a bolt hole that extends through the corresponding thick portion in a thickness direction of the thick portion, and a work hole through which a working tool is able to be inserted and which extends through the flange in a thickness direction of the flange is formed at at least one of positions between the bolt holes adjacent to each other in the circumferential direction, and
wherein a circumferential width of each thick portion that has the bolt hole and that is adjacent to the work hole in the circumferential direction is set to such a width dimension that the thick portion does not interfere with the work hole.
